# EUROPEAN PATENT SPECIFICATION

(11) **EP 3 038 472 B1**
(45) Date of publication and mention of the grant of the patent: **06.12.2017**
(21) Application number: 14796902.6
(22) Date of filing: 07.10.2014
(51) Int. Cl.: A23G 7/02, A23G 1/26, A23G 7/00

(54) **METHOD AND APPARATUS FOR PROCESSING OF FOOD ITEMS**
VERFAHREN UND VORRICHTUNG ZUR VERARBEITUNG VON LEBENSMITTELARTIKELN
PROCÉDÉ ET APPAREIL POUR TRAITER DES ARTICLES ALIMENTAIRES

(30) Priority: 29.10.2013 GB 201319050
(43) Date of publication of application: 06.07.2016
(73) Proprietor: Kraft Foods R & D, Inc., Deerfield, IL 60015 (US)
(72) Inventor: LOESER, Ulrich, D-81737 Munich (DE)
(74) Representative: Appleyard Lees IP LLP
(86) International application number: PCT/IB2014/065122
(87) International publication number: WO 2015/063629

(56) References cited:
- EP-A1- 0 914 774
- EP-A1- 1 570 745
- EP-A2- 0 855 142
- WO-A1-2011/022466
- US-A1- 2009 183 642

## Description

The present invention relates to apparatus and methods for solidifying chocolate or items comprising chocolate, particularly for solidifying of chocolate-based food items by cooling, for instance chocolate-coated confectionery items or chocolate bars or composites of chocolate-containing products.

Typically, an item comprising chocolate may be formed in a mould from liquid or molten chocolate, or by an enrobing process involving liquid or molten chocolate, or by injection of liquid or molten chocolate. The item is then typically subsequently subjected to a cooling regime by passage through a cooling tunnel or cooling tunnels, where a particular temperature profile may be applied to the chocolate over a period of time in order to solidify the chocolate in a manner that leads to the chocolate of the item having a desired crystal structure, concentration and particle size in order to give certain physical characteristics: such as reduction in fat migration driven by diffusion, resistance against subsequent temperature variation on storage, glossiness for visible chocolate surfaces, sufficient contraction for mould release for moulded products; and desired organoleptic characteristics. EP 1570745 discloses a device for moulding and solidifying chocolate in a mould. Poorly controlled solidification of pre-tempered chocolate in a product may result in crystals of cocoa butter having a variety of sizes and polymorph types, whereas control of the temperature/time profile during solidification may be used to control the proportions of polymorph types present, their crystal sizes and their concentration in the final product. Typically, the cooling may be directed to the formation of a high proportion of so-called type V crystals in order to give a glossy appearance, sharp fracture behaviour and a melting temperature range near body temperature.

Food items of, or including, chocolate, such as confectionery items are typically formed on a continuous, semi-continuous or piece-wise continuous forming, or solidification line with liquid or molten chocolate used for moulding as, coating onto, or incorporation into the item, with the molten chocolate cooled and solidified according to a desired cooling profile as the items progress along the forming line. At the end of the forming line, the formed items, with the chocolate in a solidified state, are typically transferred to a separate, interconnected or adjacent continuous packaging line for wrapping.

There may be other process stages taking place on further process lines interposed between the end of the forming line and the start of the packaging line. As used herein the term "continuous" also includes piecewise-continuous operation, where a process line operates in a "-stop-go-stop-go-" arrangement, also referred to as intermediate operation.

During the cooling stage items are subjected to a controlled temperature/time cycle as they pass along the forming line in order to solidify the chocolate components in, on or forming the items. This is usually achieved by the items passing continuously along a process line through zones or regions (i.e. cooling tunnels) maintained at specific temperatures and air speeds, so that the items are subjected to those temperatures for periods determined by the rate at which the items progress along the cooling line through the zones of controlled temperature and air speed. Cooling conditions may be non-uniform. Furthermore, any interruption to the continuous or semi-continuous operation of the forming line, for instance due to a process stoppage upstream or downstream of the product solidification stage, can lead to disruption of the temperature/time cycle for the partly-formed products which are part-way along the product solidification stage of the forming line when subject to the interruption. Such products may remain in a certain cooling zone for too long, and this can lead to problems in the chocolate characteristics of the resulting items as a result of incorrect cooling and solidification of the chocolate in these items. Prior art methods do not allow for slowing or halt of the passage of items to be cooled on demand without risk of loss in quality of the resulting solid chocolate. Examples for product defects are: product breakage due to tablet bending, crack formation, insufficient lamination between chocolate and wafer/biscuit, condensation and fat bloom. Such badly cooled items may have to be scrapped or recycled, leading to increased process cost or waste. Furthermore, it is difficult to identify impaired items and to remove them without loss in production time.

Interruptions whilst product is moving along the solidification process line may arise, for instance, as a result of a need to maintain or clean the formation line, as a result of breakdown of the line, or because of a stoppage of a process line downstream of the solidification/formation line, such as mould blockage or halt of an interconnected packaging line, so that the formation line has to be stopped to prevent build-up of items or has to be run with the items going to waste or being recycled.

Hence, it is desirable to reduce or avoid wastage, or badly cooled and solidified chocolate-based items being formed, when a continuous plant for formation of packaged items containing chocolate is subject to process stoppages.

It is one aim exemplary embodiments of the present invention, amongst others, to provide a methods and apparatuses which at least partially obviate or mitigate at least some of the disadvantages of the prior art, whether identified herein or elsewhere. It is a further aim of exemplary embodiments of the invention to provide methods and apparatuses which prevent or reduce disruption to the solidifying of chocolate or chocolate in items containing chocolate which are formed on a continuous or piecewise-continuous processing line.

According to the present invention there is provided an apparatus and method as set forth in the appended claims. Other features of the invention will be apparent from the dependent claims, and the description which follows.

Throughout this specification, the term "comprising" or "comprises" means including the component(s) specified but not to the exclusion of the presence of others. The term "consisting essentially of or "consists essentially of" means including the components specified but excluding other components except for materials present as impurities, unavoidable materials present as a result of processes used to provide the components, and components added for a purpose other than achieving the technical effect of the invention. Typically, when referring to compositions, a composition consisting essentially of a set of components will comprise less than 5% by weight, typically less than 3% by weight, more typically less than 1% by weight of non-specified components.

The term "consisting of" or "consists of" means including the components specified but excluding other components.

Whenever appropriate, depending upon the context, the use of the term "comprises" or "comprising" may also be taken to include the meaning "consists essentially of" or "consisting essentially of", and also may also be taken to include the meaning "consists of" or "consisting of".

The optional features set out herein may be used either individually, or in combination with each other, where appropriate, and particularly in the combinations as set out in the accompanying claims. The optional features for each exemplary embodiment of the invention, as set out herein are also applicable to any other aspects or exemplary embodiments of the invention, where appropriate.

An exemplary embodiment of the invention provides a method for cooling chocolate to form solid chocolate or an item comprising solid chocolate, the method comprising:
i) depositing the chocolate or item comprising chocolate within one of a plurality of temperature-controlled chambers at a loading station of a process line,
ii) controlling the temperature in the chamber over a treatment period to solidify the chocolate within the chamber according to a temperature profile,
iii) passing each temperature-controlled chamber along the process line to an unloading station,
iv) removing the item comprising solid chocolate from the respective temperature-controlled chamber, after the treatment period, at the unloading station, and
v) returning the temperature-controlled chamber to the loading station.

The chocolate may be a liquid chocolate when the chocolate or item comprising chocolate is deposited into the temperature-controlled chamber. The method may comprise depositing liquid chocolate into, onto or as the item.

By "liquid" it is meant that the chocolate is in a flowable liquid state. This does not preclude the presence of solid particles or crystals within the liquid chocolate, and the chocolate may be pre-tempered in order to provide desirable characteristics when the liquid or molten chocolate is subsequently solidified according to the method of the invention.

For the sake of brevity, chocolate or items comprising chocolate are also referred to herein as "chocolate items".

The chocolate items may be formed by depositing molten chocolate into a mould and solidifying the chocolate in the mould in the temperature-controlled chamber. The molten chocolate may be deposited into the mould prior to placing the mould in the temperature-controlled chamber.

A plurality of items may be formed by deposition of molten chocolate into moulds in a tray comprising a plurality of moulds prior to placement of the tray into the temperature-controlled chamber. The items may then be removed from the temperature-controlled chamber at the unloading station by removal of the tray from the temperature-controlled chamber. The temperature-controlled chambers may each hold a plurality of such removable trays, for instance with the trays retained in a stacked configuration. In a suitable configuration, the tray itself may act as a mould.

Following the end of the treatment period, the temperature in the temperature-controlled chamber may be maintained at a holding temperature until removal of each item from the temperature-controlled chamber. The term "temperature profile" as used herein means that the chocolate items are subjected to a specific predetermined temperature as a function of time, with the temperature varying as a function of time. The temperature profile takes place over the treatment period, and at the end of the treatment period the chocolate items may be held at a constant holding temperature until removal from the respective temperature-controlled chamber. The treatment period may be arranged to commence at some time after the items have been deposited into the chamber, or may be initiated, for instance, by the operation of closing the chamber once the items have been deposited therein. The treatment period is suitably shorter than, or equal to, the time between the end of loading a temperature-controlled chambers and the commencement of unloading of the same temperature-controlled chamber after its passage along the process line.

The method of the invention may include a plurality of instances when chocolate is deposited into moulds, for instance chocolate may be first deposited for formation of a bottom shell of chocolate, followed by a further chocolate deposition as an ingredient fill, followed by a further capping deposition of chocolate. Optionally, a cooling or conditioning step may be included between each deposition of chocolate in order to solidify the chocolate prior to the next deposition of chocolate.

In the event of a stoppage occurring in a related process upstream or downstream of the process line, for instance in other stages of an overall process, including, say, chocolate processing prior to inclusion of the chocolate in the items, or packaging of the tempered items, then the temperature-controlled chambers may be retained in a holding region of the process line prior to their progressing to the unloading station.

The item may be subjected to a temperature-controlled gas flow within the temperature-controlled chamber. At least one of the item and the temperature-controlled gas flow may be periodically moved relative to the other of the item and the temperature-controlled gas flow, within the temperature-controlled chamber.

The humidity of a gas within the temperature-controlled chamber may be controlled to prevent condensation of moisture within the chamber in use. For instance, the humidity may be controlled so that the temperature during the temperature profile does not have a value less than or equal to the dew point at the humidity within the temperature-controlled chamber.

Typically, the gas may be air or may be an inert gas such as nitrogen.

In the method of the invention, chocolate items, following solidification, may be removed from the temperature-controlled chambers at the unloading station, and input into a packaging machine. The chambers may be presented sequentially to an input of a packaging line where the tempered items are discharged into the input of the packaging line for subsequent wrapping. If the items were in a tray, this tray may be removed from the chamber at the unloading station for discharge of the items and for refilling. The tray, after refilling, may be placed back in the same chamber or in a different chamber. Typically, the tray of moulds may be re-warmed to a desired temperature prior to refilling of the moulds.

An exemplary embodiment of the invention provides an apparatus for cooling chocolate to form solid chocolate or an item comprising solid chocolate, the apparatus comprising:
a process line having a loading station and an unloading station, and
a plurality of temperature-controlled chambers each adapted to retain chocolate or at least one item comprising chocolate therein
   wherein the process line is arranged to cyclically:
   convey the temperature-controlled chambers along the process line to the unloading station following deposition of chocolate or at least one item comprising chocolate into each temperature-controlled chamber at the loading station, and
   return the temperature-controlled chambers to the loading station following solidification of the chocolate or item comprising chocolate within its respective temperature-controlled chamber and subsequent removal of the item from its respective temperature-controlled chamber at the unloading station,
   wherein each temperature-controlled chamber comprises a temperature controller arranged for providing a predetermined temperature in the temperature-controlled chamber over a treatment period, according to a temperature profile.

The temperature controller may comprise a heater in order to heat gas for use in the chamber for providing the predetermined temperature within the chamber. Gas may be circulated around the interior of the chamber or may be drawn into the chamber from the environment or atmosphere around the chamber, circulated around the interior of the chamber and then discharged to be replaced by further gas drawn into the chamber. The temperature controller may comprise a chiller for cooling the gas in the chamber. By controlling the chiller and heater, the gas temperature in the chamber may be set at the required predetermined temperature needed for the temperature profile. If the environment or atmosphere around the chamber is at a low temperature, lower than, or equal to, the coolest temperature required for the temperature profile and the holding temperature, then it may not be necessary for the temperature controller to include a chiller, as the cold gas external to the chamber should only need to be heated as, or after, it is drawn into the chamber in order to bring the gas temperature in the chamber to a desired predetermined level. The temperature controller may include a computer processor running a temperature control program which is arranged to provide the temperature profile within the chamber. The initiation of the temperature profile may be triggered, for instance, by the closing of a door to the chamber following deposition of the items into the chamber at the loading station. The temperature controller may also include a blower arranged to cause gas at the predetermined temperature to be circulated around the interior of the enclosure and around the items to be subjected to the temperature profile.

The temperature-controlled chamber may comprise a mould arranged for formation of the item by deposition molten chocolate into the mould and solidification of the chocolate therein, within the temperature-controlled chamber. Each temperature-controlled chamber may comprise at least one tray comprising a plurality of moulds. The tray may be arranged for removable mounting within the temperature-controlled chamber.

The temperature controller may be arranged to maintain the temperature in the temperature-controlled chamber at a holding temperature after the end of the temperature profile until removal of each item from its respective temperature-controlled chamber.

The temperature controlled chambers may each further comprise a humidity controller.

An exemplary embodiment of an apparatus or process according to the invention may comprise an enclosure arranged for conveying and retention of the plurality of temperature-controlled chambers. The enclosure may comprise a carousel for conveying and retention of the plurality of temperature-controlled chambers. For instance, the carousel may be arranged to convey the chambers from the loading station to the unloading station and then back again to the loading station in a cyclical manner. A plurality of carousels may be employed, for instance interconnected, whereby the temperature-controlled chambers may be diverted, for instance from a first carousel to a second carousel where they may be held or parked to provide flexibility by being available for return to the first carousel in response to process capacity demands.

A carousel arrangement may be provided, for instance, as an aerial ropeway, deployed in a manner similar to a gondola or chair arrangement as used for ski lifts, where the individual temperature-controlled chambers may be clamped onto the ropeway as required, providing flexibility in process capacity demands.

The enclosure may comprise a paternoster apparatus for conveying and retention of the plurality of temperature-controlled chambers. This arrangement may have the chambers conveyed upwards from a loading station to an apex, then back downwards, in a loop, to an unloading station, or alternatively may have the chambers conveyed downwards from a loading station to a nadir, then back upwards, in a loop, to an unloading station.

The loading station and the unloading station may be the same station, such that the same station may be employed for loading and unloading of items respectively into, or from, the chambers.

The paternoster apparatus has the advantage that for a work space having a high ceiling, the process line may be arranged to take up a reduced floor area compared to an equivalent arrangement where the chambers are conveyed along horizontal conveyors around a loop between the stations. A plurality of paternoster apparatuses may be employed as part of the process line, for instance with the items being transferred from a first paternoster apparatus to a second paternoster apparatus during the solidification process. Alternatively, the paternoster apparatuses may be arranged for transfer of temperature-controlled chambers between the individual apparatuses to provide a multi-stage process, for instance with further liquid chocolate addition or deposition between the stages. Paternoster apparatuses may be mounted in moveable manner for simplification of reconfiguration, repair or maintenance of the process line; for instance the paternoster apparatuses may be mounted on rails for ease of movement.

The enclosure of the carousel or paternoster may comprise a control apparatus arranged to provide a temperature-controlled atmosphere around the temperature-controlled chambers. The control apparatus may be further arranged to provide a humidity-controlled atmosphere around the temperature-controlled chambers.

As explained above, the temperature-controlled chambers may be arranged to draw gas from their surroundings and to heat that gas if required for provision of the gas at predetermined temperature within the chamber. In particular, where an enclosure is used, the temperature of the atmosphere around the chambers in the enclosure may be controlled to be lower than, or equal to, the lowest temperature required for the temperature profile (or for any holding temperature after tempering), whereby it will only be necessary for the temperature controller of each chamber to either circulate the gas without further heating after drawing it into the chamber, or to the heat gas to achieve the necessary temperature profile and holding temperature, so that no cooler is required within each temperature-controlled chamber.

As already explained above, the temperature controller may comprise a gas blower arranged to provide a temperature-controlled gas flow over the items within each temperature-controlled chamber. At least one of the item and the gas blower may be arranged for periodic movement, relative to the other of the item and the gas blower, within each temperature-controlled chamber. This may ensure a more even distribution of gas at the predetermined temperature directed towards the items.

The gas blower may have a loop-shaped nozzle arranged to encircle the item at a central region of the loop-shaped nozzle and to direct the temperature controlled gas flow towards the central region of the loop-shaped nozzle. For instance, the loop-shaped nozzle may include a slot around its inner surface through which gas may be blown towards the central region of the loop-shaped nozzle.

The loop-shaped nozzle may be arranged to move to and fro along an axis passing through the central region. The loop-shaped nozzle may be circular in shape, or may be in the form of an ellipse or flattened hoop. Typically, if the items are located within the temperature-controlled chambers in trays of moulds, the loop-shaped nozzle may be in the form of a flattened hoop arranged to encircle the trays to provide a flow of temperature-controlled gas towards the tops and also towards the bottoms of the trays. This arrangement may provide improved uniformity in temperature compared to prior art arrangements.

An exemplary embodiment of the invention provides a temperature-controlled chamber adapted for retaining and tempering items comprising chocolate, the chamber comprising: a temperature controller arranged for providing a predetermined temperature over treatment period within the chamber according to a temperature profile, and wherein the chamber is adapted for conveying of the chamber along a process line with the control unit operable to vary the predetermined temperature over time independently of a location of the chamber along said process line.

The temperature controller may comprise a gas blower arranged to provide a temperature-controlled gas flow over said items. At least one of the item and the gas blower may be arranged for periodic movement relative to each other within the temperature-controlled chamber. For instance the chamber may include a holder for the item with the holder arranged to move to and fro relative to a static blower, or the holder or item may be static within the chamber with the blower arranged to move to and fro.

The gas blower may have a loop-shaped nozzle arranged to encircle the item at a central region of the loop-shaped nozzle and to direct the temperature controlled gas flow towards the central region of the loop-shaped nozzle. The loop-shaped nozzle may be arranged to move to and fro along an axis passing through the central region.

The temperature-controlled chamber may be arranged to draw gas from its surroundings and to heat that gas if required for provision of the gas at the predetermined temperature within the chamber. The temperature controller may comprise a heater and optionally a chiller for modifying the gas temperature and may include a computer processor running a programme to control the gas temperature to match the required temperature profile over the treatment period and to maintain the temperature at any holding temperature if required: the chamber may suitably be capable of maintaining the items at a holding temperature, after completion of the temperature profile, at the end of the tempering period.

Electrical power may be supplied to the temperature-controlled chamber by means of a power supply integrated into a means for retaining the temperature-controlled chamber attached the process line. For example, a support rod arranged to suspend the temperature controlled chamber from a carousel or aerial ropeway may include an electrical connector for use as a power supply. In another exemplary embodiment according to the invention, the temperature controlled chamber may include a rechargeable battery as a power supply, with the battery being recharged, for instance, whilst the chamber is not in use or as the chamber is returned from the unloading station to the loading station.

In the event of a stoppage upstream or downstream of the tempering process line, the chambers may retained on the tempering process line in a holding pattern (irrespective of which stage the product has reached in the temperature profile as this is controlled separately and individually for each chamber). For instance, a carousel or paternoster apparatus, as already described, could be used for holding and retaining the chambers during an interruption in packaging. If the stoppage is for a long period, it may be that the items in the chambers of the solidification process line will all have reached the end of their temperature profile, in which case the temperature controllers of the individual chambers will hold the temperature of the chambers at the holding temperature until the entire process can be resumed. When the stoppage is over the chambers may be conveyed to the unloading station for emptying of the items and to the loading station for replenishment. Whilst the stoppage is underway, the items are not loaded or unloaded, once all of the chambers of the tempering line are full or empty (depending upon whether the stoppage is upstream or downstream), until the stoppage is over.

The item may be a food item, where the term food item may refer to a snack food item, for instance to a confectionery item. The present invention is appropriate to chocolate food items or food items comprising chocolate. Food items include: chocolate products, including chocolate in bar form, and chocolates. Food items include sugar-food or sugar-replacement or candy products, for example caramel products, toffee products, fudge products, marshmallow products, nougat products, sweets and gums. Food items include flour-based food products, for example cakes, biscuits, cookies and sweet or savoury pastries. The food item may be prepared by baking of a dough or batter. The food item may be a frozen food item such as an ice, ice-cream, frozen sorbet, frozen yoghurt or the like. The food item may be a chocolate product or a caramel, toffee or fudge product. The food item may be a chocolate or chocolate-based item such as a chocolate bar, for instance a solid chocolate bar or a filled chocolate bar or item. Typically, a food item such as a chocolate bar or a similar such item, may be formed in a mould. The item may then be removed from the mould as a solid product for subsequent wrapping of the item. The food item may have a solid outer surface at ambient temperature. Although an interior of the product may not necessarily be solid, such food items may be self supporting as a result of their solid exterior.

The food item may be a moulded item comprising chocolate or a baked, moulded item, such as a moulded biscuit or a moulded cake, also comprising chocolate.

The term "chocolate-based" is used herein to mean that the product comprises chocolate. For a chocolate-based food item, the outer surface of the food item may comprise a solid layer of chocolate enrobing or partially covering an interior item which may be a non-chocolate item or filling, or, for instance, which may be a biscuit or a cake.

The term chocolate in the context of the present invention is not restricted by the various definitions of chocolate provided by government and regulatory bodies. Nor are the terms biscuit or cake so restricted.

The chocolate may comprise a cocoa-derived product, a fat and at least one sweetener. Suitable cocoa-derived products include low-fat cocoa solids (also called non-fat cocoa solids of NFCS), cocoa liquor and cocoa butter.

By low-fat or non-fat cocoa solids it is meant to refer to the component remaining after removal, or partial removal, of fats from cocoa liquor. Cocoa butter is both a cocoa-derived product and a fat. In some embodiments the cocoa butter may be the only fat. In these embodiments the chocolate may comprise cocoa butter and at least one sweetener. In some embodiments the chocolate comprising cocoa butter may comprise an additional fat.

In some embodiments the chocolate comprises low-fat cocoa solids, a fat and at least one sweetener. The fat may be a single fat or a combination of more than one fat. Suitable fats include cocoa butter and cocoa butter alternatives. Suitable cocoa butter alternatives include, butterfat, a cocoa butter equivalent (CBE), a cocoa butter replacer (CBR), a cocoa butter substitute (CBS), (sometimes used interchangeably with CBR), a vegetable fat that is liquid at standard ambient temperature and pressure (SATP, 25°C and 100kPa) or any combination of the above.

CBEs are defined in European Directive 2000/36/EC as complying with the following criteria:
a) they are non-lauric vegetable fats, which are rich in symmetrical monounsaturated triglycerides of the type POP, POSt and StOSt;
b) they are miscible in any proportion with cocoa butter, and are compatible with its physical properties (melting point and crystallisation temperature, melting rate, need for pre-tempering phase);
c) they are obtained only by the processes of refining and/or fractionation, which excludes enzymatic modification of the triglyceride structure.

Suitable CBEs include illipe, Borneo tallow, tengkawang, palm oil, sal, shea, kokum gurgi and mango kernel or synthetic CBEs such as COBERINE (RTM) produced by Loders Croklaan, The Netherlands. CBEs may be used in combination with cocoa butter.

Suitable CBSs (or CBRs) include CBS laurics and CBS non-laurics. CBS laurics are short-chain fatty acid glycerides. Their physical properties vary but they all have triglyceride configurations. Suitable CBSs include those based on palm kernel oil and coconut oil. CBS non-laurics consist of fractions obtained from hydrogenated oils. The oils are selectively hydrogenated with the formation of trans acids, which increases the solid phase of the fat. Suitable sources for CBS non-laurics include soya, cottonseed, peanut, rapeseed and corn (maize) oil.

Suitable vegetable fats are liquid at standard ambient temperature and pressure (SATP, 25°C and 100kPa). A liquid vegetable fat may be employed when a liquid chocolate composition is desired. Suitable vegetable fat sources include corn oil, cotton seed oil, rapeseed oil, palm oil, safflower oil, and sunflower oil. Some or all of the fat may be a partly or wholly non-metabolisable fat, for example Caprenin or Olestra.

"Chocolate" in the context of the present invention may include dark, milk, white, compound chocolate and any other food mass which is solid at ambient temperature and contains fat (e.g. cocoa butter or cocoa butter alternative) and one or more components derived from cocoa beans (e.g. cocoa powder). A sweetener (e.g. sucrose) is typically also contained in the chocolate. Other optional components include milk components (e.g. milk fat and milk powder).

As used herein, the term wt% is used as an abbreviation for "parts by weight expressed as a percentage of the total weight".

The chocolate may comprise at least 1 wt% low-fat cocoa solids, such as at least 5 wt%, for example at least 8 wt% low-fat cocoa solids. The chocolate may comprise up to 30 wt% low-fat cocoa solids, such as up to 20 wt%, for example up to 15 wt% low-fat cocoa solids. The chocolate may comprise at least 10 wt% of a fat, such as at least 20 wt%, for example at least 30 wt% of a fat. The chocolate may comprise up to 70 wt% of a fat, such as up to 60 wt%, for example up to 50 wt% of a fat.

The low-fat cocoa solids and fat together may provide at least 20 wt% of the chocolate, such as at least 30 wt%, for example at least 40 wt%. The low-fat cocoa solids and fat together may provide up to 90 wt% of the chocolate, such as up to 80 wt%, for example up to 70 wt%. Suitably the fat present in the chocolate is cocoa butter.

The chocolate may comprise cocoa liquor. Cocoa liquor comprises low-fat cocoa solids and cocoa butter. The chocolate may comprise cocoa liquor and an additional fat. Suitable additional fats are as described above in relation to the fat. The chocolate may comprise cocoa liquor and additional cocoa butter.

The chocolate may comprise at least one sweetener. The at least one sweetener may be a bulk sweetener or an intense sweetener. Suitable bulk sweeteners include sucrose, invert sugar syrup, caramel, glucose, fructose, polydextrose, high fructose corn syrup, maltodextrin, honey, maple syrup, agave syrup, jam, marmalade, and sugar alcohols, for example glycerol, maltitol, isomalt, sorbitol, xylitol, lactitol, erythritol, galactitol, polyglycitol and mannitol.

The chocolate may comprise at least 1 wt% of a bulk sweetener, such as at least 10 wt%, for example 20 wt% of a bulk sweetener. The chocolate may comprise up to 70 wt% of a bulk sweetener, such as up to 60 wt%, for example up to 55 wt% of a bulk sweetener.

When more than one bulk sweetener is provided these definitions of proportion refer to the total amount of the bulk sweeteners (this principle applies to other components defined in this specification).

The chocolate may comprise at least one intense sweetener, for example to alter the flavour or reduce the calorie value of the edible material. Suitable intense sweeteners are selected from, for example, aspartame, saccharin, sucralose, acesulfame-K, stevia sodium cyclamate and neohesperidine. An intense sweetener may be present in an amount of from 0.01 to 2 wt%.

The chocolate may comprise additional ingredients. Suitable additional ingredients include milk products, surfactants such as emulsifiers and flavourings.

Suitable milk products include milk solids and milk fat. Suitable milk solids include skimmed milk powder.

Suitable flavourings for the chocolate include nuts pastes, for example hazelnut paste, fruit flavourings, for example orange essence, mint essence, lemon grass, coriander, cinnamon, chilli, ginger, coffee, and vanillin.

The chocolate product may consist essentially of chocolate or it may comprise further ingredients. In some embodiments the further ingredients may be dispersed within the chocolate. In some embodiments chocolate pieces may be dispersed within the other ingredients. In some embodiments the chocolate may provide a coating around other ingredients. In some embodiments the chocolate may provide a topping or filling. In some embodiments the chocolate may be intimately mixed with other ingredients.

The skilled person will understand the range of such chocolate items that are available. These include, for example, tablets and other shaped items consisting essentially of chocolate; tablets and other shaped items having pieces of fruit, nut, biscuit, toffee, cereals and the like dispersed therein; food or baked items having chocolate pieces dispersed therein; food or baked items partially or fully covered by a chocolate layer or including an internal chocolate layer or filling; and a chocolate tablet or other shaped item mixed with a flavouring agent.

In some embodiments of the invention the chocolate may be or comprise a dark chocolate. The dark chocolate may comprise at least 30 wt% cocoa-derived products, such as at least 35 wt%, for example at least 40 wt% cocoa-derived products. The dark chocolate may comprise up to 99 wt% cocoa solids, such as up to 90 wt%, for example up to 80 wt% cocoa solids.

Typically dark chocolate comprises cocoa-derived products and a sweetener as major components, in varying amounts which can readily be determined by the skilled person in accord with the type of chocolate being produced, but substantially no dairy-derived components, for example milk solids.

The dark chocolate may comprise cocoa liquor and cocoa butter. Additional low-fat cocoa solids may be present.

In some embodiments of the invention, the chocolate may be or comprise a milk chocolate. The milk chocolate may comprise cocoa-derived products, for example cocoa liquor and cocoa butter, a sweetener, and a dairy component, for example milk solids, as major components, these being in varying amounts which can readily be determined by the skilled person in accord with the type of chocolate being produced.

The dairy component is a major component in distinguishing milk chocolate from dark chocolate and another is, typically, the lesser amount of cocoa-derived products, compared with many dark chocolates.

The milk chocolate may comprise at least 10 wt% cocoa-derived products, such as at least 15 wt%, for example at least 20 wt% cocoa-derived products. The milk chocolate may comprise up to 40 wt% cocoa-derived products, such as up to 35 wt%, for example up to 30 wt% cocoa-derived products. The milk chocolate may comprise at least 10 wt% milk solids, such as at least 15 wt%, for example at least 20 wt% milk solids. The milk chocolate may comprise up to 40 wt% milk solids, such as up to 35 wt%, for example up to 30 wt% milk solids.

In some embodiments the chocolate may be a white chocolate. The white chocolate may comprise cocoa butter, a sweetener, and a dairy component, for example milk solids, and substantially no cocoa solids.

The white chocolate may comprise at least 10 wt% cocoa butter, such as at least 15 wt%, for example at least 20 wt% cocoa butter. The white chocolate may comprise up to 40 wt% cocoa butter, such as up to 35 wt%, for example up to 30 wt% cocoa butter. The white chocolate may comprise at least 10 wt% milk solids, such as at least 15 wt%, for example at least 20 wt% milk solids. The white chocolate may comprise up to 40 wt% milk solids, such as up to 35 wt%, for example up to 30 wt% milk solids.

The chocolate may comprise a whey protein product. The whey protein product may be derived from cheese whey, casein whey or soy whey. Cheese whey is the by-product of the acid or rennet coagulation of protein (casein) from milk. Suitable forms of whey protein products include dried whey, delactosed whey, calcium treated delactosed whey, delactosed whey and demineralized whey. Demineralization of whey may be carried out using any known method. Suitable methods of demineralizing whey include electrodialysis, ion exchange, ultrafiltration and reverse osmosis.

In some embodiments the chocolate may comprises demineralized whey. The chocolate may comprise a milk product and a whey protein product. The chocolate may comprise a whey protein product and no milk products. The whey protein product may partially or fully replace a milk product in a chocolate. The chocolate may comprise at least 1 wt% of a whey protein product, such as at least 2 wt%, for example at least 4 wt% of a whey protein product. The chocolate may comprise up to 10 wt% of a whey protein product, such as up to 6 wt% of a whey protein product.

Features of any exemplary embodiment may, where appropriate, be combined with and/or replace a feature of any other exemplary embodiment, as would be apparent to the skilled person, without departing from the scope of the invention as defined by the claims.

For a better understanding of the invention, and to show how example embodiments of the same may be carried into effect, reference will be made, by way of example only, to the accompanying diagrammatic Figures, in which:
Figure 1 schematically depicts a process flow according to prior art methods for solidification of chocolate-based items using moulds;
Figure 2 schematically depicts an apparatus according to an exemplary embodiment of the invention comprising a paternoster apparatus;
Figure 3 schematically depicts a side-by-side arrangement of paternoster apparatuses according to an exemplary embodiment of the invention;
Figure 4 schematically depicts an apparatus according to an exemplary embodiment of the invention, the embodiment comprising a carousel arrangement;
Figure 5 schematically depicts an apparatus according to an exemplary embodiment of the invention, the embodiment comprising two adjacent carousel arrangements;
Figure 6 schematically depicts a perspective side view of a temperature-controlled chamber according to an exemplary embodiment of the invention, with a door of the temperature-controlled chamber in a open position;
Figure 7 schematically depicts a plan view of the exemplary embodiment of a temperature-controlled chamber as shown in Figure 6, with the door closed and with the uppermost surface of the chamber removed so that interior components can be clearly shown;
Figure 8 schematically depicts an gas blower having a loop-shaped nozzle for use in an exemplary embodiment of a temperature controlled chamber according to the invention;

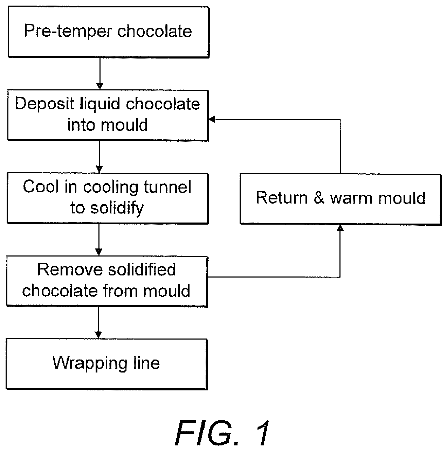

Figure 1 shows a schematic process flow chart setting out an example of a prior art method used for chocolate solidification using a cooling tunnel. Chocolate is pre-tempered to form a liquid which is deposited into moulds in a mould tray. The trays are conveyed through a cooling tunnel where cooled air is blown through the tunnel and over the mould trays to solidify the chocolate. At the end of the cooling tunnel, the solidified chocolate (bars in this Example) is removed from the moulds of the mould trays and passed on to a wrapping line for packaging. The emptied mould trays are warmed and returned to the start of the process for re-filling.

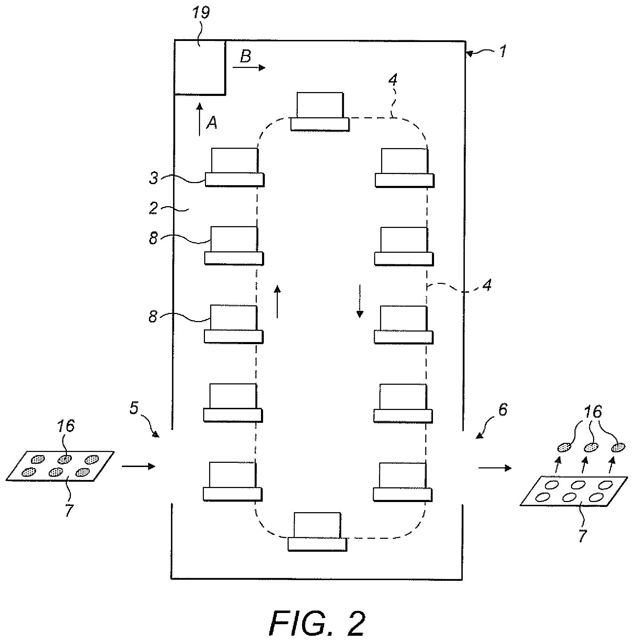

Turning to Figure 2, this shows a solidification process line 1 having a paternoster apparatus according to an exemplary embodiment of the invention and suitable for use in an exemplary embodiment according to a method of the invention. An enclosure 2 has a number of shelves 3 each of which is arranged to carry, and provide a power supply to, a respective temperature controlled chamber 8, which is supported on each shelf 3. A conveying apparatus 4, not shown in detail, is arranged to cycle the shelves 3 and chambers 8 vertically upwards from the bottom of the enclosure to an apex and subsequently downwards again to the bottom of the enclosure 2 in a loop. The enclosure 2 has a control apparatus in the form of a heater/chiller 19 which draws gas in, in the direction A and blows gas out in the direction B to provide a circulation of gas maintained at a constant temperature within the enclosure 2, such that the gas is maintained at a temperature less than or equal to the lowest temperature required for the temperature profile or holding temperature.

Trays 7 are arranged to carry a number of chocolate items 16 held within moulds of the trays 7, and the trays 7 are inserted into the temperature-controlled chambers 8 at the loading station 5 and removed from the temperature-controlled chambers 8 at an unloading station 6, after completion of a treatment period, over which the chocolate items 16 are subjected to a temperature profile whilst within their respective temperature-controlled chamber 8.

After removal of the trays 7 from the temperature controlled chambers 8 at the unloading station 6, and removal of the chocolate-based items 16 for subsequent packaging, the empty trays 7 are returned to the loading station 5 where they are refilled with chocolate and re-enter the process once more at the loading station 5.

As the temperature-controlled chambers 8 are conveyed around the loop, the chocolate items 16 are subjected to a predetermined temperature as a function of time (the temperature profile) within each chamber 8, in the manner as set out herein and described in more detail below.

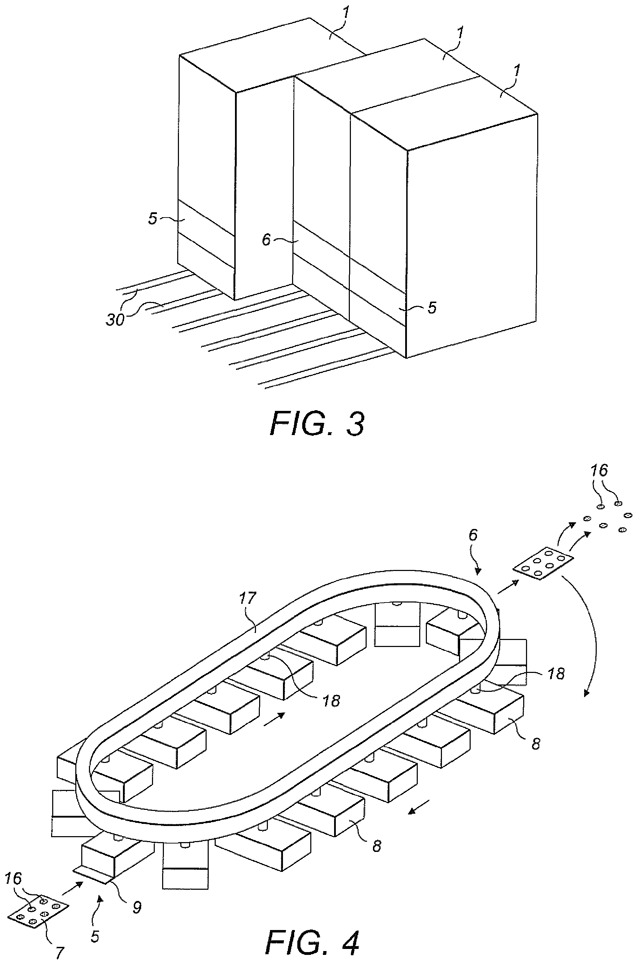

Figure 3 shows a second exemplary embodiment of the invention, similar to that of Figure 2 but with Figure 3 a side-by-side arrangement of paternoster apparatuses 1is shown, demonstrating how such an arrangement may be used to make best use of building space and with the paternoster apparatuses 1 arranged to move on rails 30 for easy reconfiguration. The paternoster apparatuses 1 are arranged with alternating loading 5 and unloading 6 stations so that a plurality of intermediate solidification steps may be carried out in sequence. Alternatively, the plurality of paternoster apparatuses 1 could be arranged in series with the temperature-controlled chambers 8 moving between the apparatuses 1, for instance in order to provide a longer treatment period as the chambers move through several paternoster apparatuses. In another suitable arrangement, paternoster arrangements may be used at an interface between different portions of a process line.

Figure 4 shows a process line 1 according to another exemplary embodiment of the invention, having a carousel arrangement, which is suitable for use in an exemplary embodiment according to a method of the invention. A conveying arrangement includes a track 17 in the form of a loop arranged to cycle temperature-controlled chambers 8 horizontally around track 17 a loading station 5 at one end of the track and an unloading station 6 at an opposite end of the track. As with the exemplary embodiment set out in Figure 1, the conveying arrangement may be in a chilled enclosure where the gas temperature is maintained as at a constant temperature lower than, or equal to, the lowest temperature required for the temperature profile or for the holding temperature after tempering (not shown in this embodiment).

The temperature-controlled chambers 8 are suspended from the track by support rods 18 which also provide electrical power to the chambers 8 from the track 17.

Trays 7 are arranged to carry a number of chocolate items 16 held within moulds of the trays 7, and the trays 7 are inserted into the temperature-controlled chambers 8 at the loading station 5, with the door 9 open, and removed from the temperature-controlled chambers 8 at an unloading station 6, again with door 9 open, after completion of a treatment period, over which the chocolate items 16 are subjected to a temperature profile whilst within their respective temperature-controlled chamber 8.

After removal of the trays 7 from the temperature controlled chambers 8 at the unloading trays 7 are returned to the loading station 5 where they are refilled with chocolate and re-enter the process once more at the loading station 5. Alternatively, the tray 7 may be returned into the temperature-controlled chambers 8 following removal of the chocolate-based items 16 and returned to the loading station 5 within the respective chamber 8, with the tray 7 then being removed refilled with chocolate items 16 for tempering and reloaded into a chamber 8 at the loading station 5.

It will be understood that this exemplary embodiment may operate in a piecewise-continuous manner or in a truly continuous manner depending upon how the loading 5 and unloading 6 stations are configured.

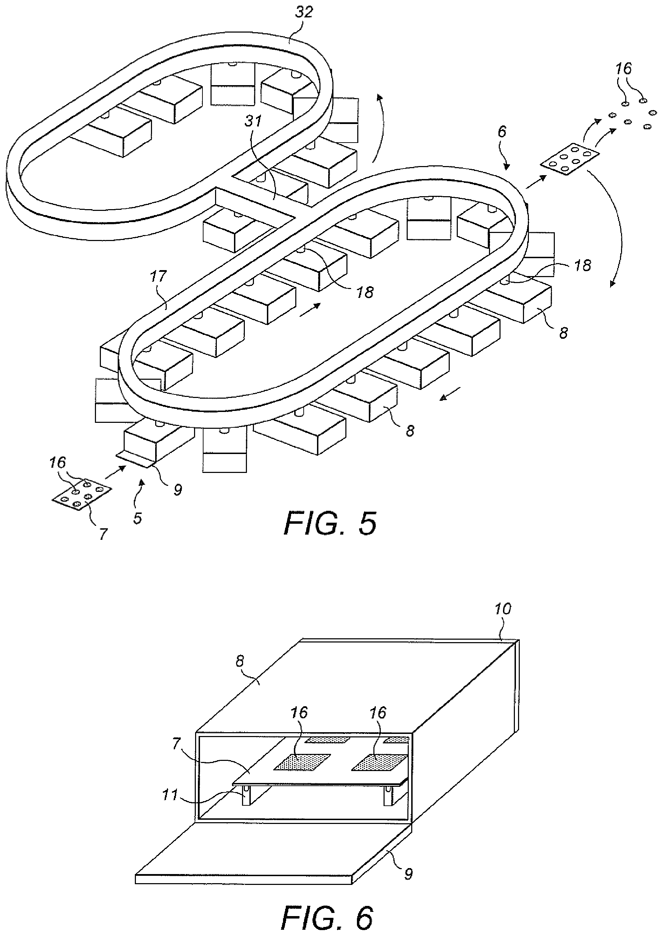

Figure 5 shows a further exemplary embodiment according to the invention, where in this embodiment, a second carousel track 32 is provided in the form of a holding loop connected to the first carousel track 17 at junction 31. Control means (not shown) can be arranged to divert the temperature-controlled chambers 8 from the first carousel track 7 to the second carousel track 32 in order to provide buffering capacity when required.

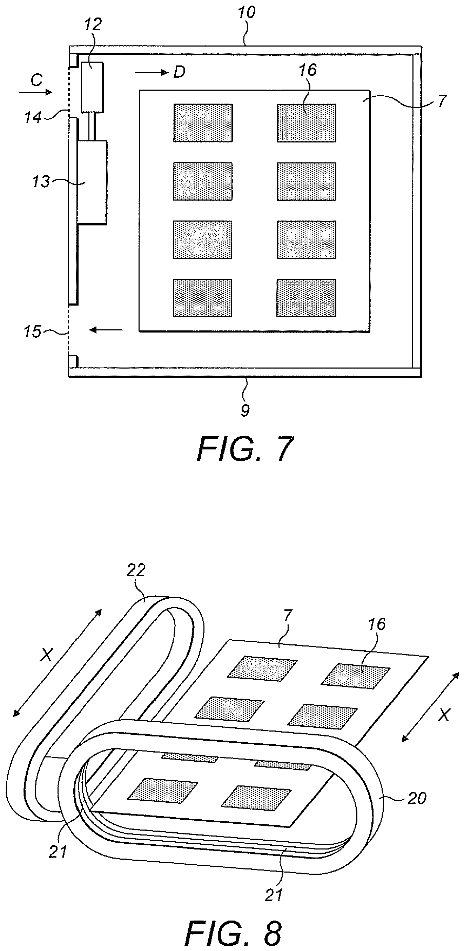

Figures 6 and 7 show details of an exemplary embodiment of a temperature-controlled chamber 8 suitable for use with the exemplary embodiments of Figures 2 to 5, or for use generally with the invention. In Figures 6 and 7, the temperature-control chamber 8 is shown with the door 9 open in Figure 3 and closed in Figure 4. In Figure 4, the upper surface of the lid of the temperature-control chamber has been removed so that the internal components may be seen in the plan view of Figure 4. Electrical power connections have not been shown in these Figures, but will be through the shelf 3 or support rod 18 as indicated in Figures 1 and 2.

A tray 7 is shown mounted on runners 11 within the interior of the chamber 8 and containing chocolate items 16 in the form of moulded chocolate bars. The chamber 8 also includes a computer processor 13 running a temperature control programme and operating a combined heater/blower unit 12 which draws gas into the interior of the chamber 8 in direction C through an inlet grating 14 with gas being pushed out of the chamber through outlet grating 15. The gas travel within the chamber is approximately in the directions indicated by the arrows D.

The computer processor 13 is arranged to commence the temperature profile following closure of the door 9 after chocolate items 16 have been placed in the tray 7 inside the chamber 8. The chamber 8 as shown is intended for operation in surroundings where the gas temperature outside the chamber is at a temperature less than the temperature required at any point during the temperature profile or the holding temperature. Hence, no chiller unit is required and it is only necessary for the heater/blower 12 to heat gas drawn in, in the direction C, for circulation around the interior of the chamber 8 prior to it being ejected from the chamber through outlet grating 15.

Although the Figures show only a single mould tray 7 loaded into each chamber 8, it will be understood that an embodiment where a plurality of stacked trays 7 are arranged in each temperature-controlled chamber also falls within the scope of the invention.

Figure 8 shows the tray 7 and blower arrangement for the interior of a chamber 8 according to an exemplary embodiment of the invention, with the remainder of the chamber 8 removed for clarity. The remainder of the chamber 8 is essentially as for the chamber 8 in Figures 3 and 4, but with the heater/blower unit 12 replaced by the blower arrangement as shown in Figure 8. It will be understood that the tray support arrangement will need to be compatible with the blower arrangement to allow the tray to be supported in the position shown encircled by the loop-shaped gas-blower 20. For the arrangement shown in Figure 5, the gas blower 20 is arranged to have a loop-shaped nozzle encircling the tray 7 having a slot 21 extending around the interior face of the loop-shaped nozzle and directing a flow towards the centre of the loop and hence towards the top and bottom surfaces of the tray 7 and the chocolate items 16 held within the tray 7 in the chamber 8. A slotted carrier 22 holds the loop shaped nozzle and is arranged to move the loop-shaped nozzle to and fro along the length of the tray 7 in the direction indicated X. In this way, an even gas flow at a controlled temperature can be directed to the upper and lower surfaces of the tray 7 in order to provide better temperature control during the temperature profile. As with the heater/blower of the exemplary embodiment shown in Figures 3 and 4, the gas blower 20 includes a heater and is controlled by a computer processor to vary the temperature of the gas blown through the slot 21 in accordance with the temperature profile or the holding temperature, depending upon the circumstances.

For all of the exemplary embodiments set out above, it will be understood that in the event of a stoppage upstream or downstream of the solidification process line, the process line may continue to operate with the chambers taking the chocolate items through the desired temperature profiled and then retaining them at the holding temperature until normal operation can recommence once the stoppage has been eliminated. Specifically, even when the conveying of the chambers around the loop of the solidification process line is halted, the temperature-controlled chambers 8 may continue to control the temperature within each chamber 8 independently of the stoppage. This means that the chocolate-based items can complete their required conditioning, within their respective, temperature-controlled chambers 8, irrespective of the position or location of the chamber along the process line, and do not have to be discarded to scrap or recycled back to a melt stage.

Furthermore, the exemplary embodiments of the invention provide the capability to achieve controlled cooling and solidification with a considerable reduction in the volume of conditioned air required to provide the necessary heat exchange, when compared to conventional cooling tunnel arrangements as used in the prior art.

Another advantage of the exemplary embodiments of the invention is that different products may be solidified on the same process line, using a separate chamber for each product batch, so that the minimum batch size for a particular product may be related to the size of the individual temperature-controlled chamber.

Although a few exemplary embodiments have been shown and described, it will be appreciated by those skilled in the art that various changes and modifications might be made without departing from the scope of the invention, as defined in the appended claims. For instance, although reference has been made to a moulded chocolate bar in the exemplary embodiments set out above, it will be understood that the chocolate bar may be substituted by, for instance, a chocolate-coated biscuit, or a chocolate coated ice cream and yet still be according to the invention.

Attention is directed to all papers and documents which are filed concurrently with or previous to this specification in connection with this application and which are open to public inspection with this specification. All of the features disclosed in this specification (including any accompanying claims, and drawings), and/or all of the steps of any method or process so disclosed, may be combined in any combination, except combinations where at least some of such features and/or steps are mutually exclusive.

## Claims

1. A method for cooling chocolate to form solid chocolate or an item comprising solid chocolate, the method comprising:
i) depositing the chocolate or item comprising chocolate within one of a plurality of temperature-controlled chambers at a loading station of a process line,
ii) controlling the temperature in the chamber over a treatment period to solidify the chocolate within the chamber according to a temperature profile,
iii) passing each temperature-controlled chamber along the process line to an unloading station,
iv) removing the item comprising solid chocolate from the respective temperature-controlled chamber, after the treatment period, at the unloading station, and
v) returning the temperature-controlled chamber to the loading station.

2. The method of claim 1 wherein following the end of the treatment period, the temperature in the temperature-controlled chamber is maintained at a holding temperature until removal of the item from the temperature-controlled chamber.

3. The method of claim 1 or claim 2 wherein the item is subjected to a temperature-controlled gas flow within the temperature-controlled chamber, optionally wherein at least one of the item and the temperature-controlled gas flow is periodically moved relative to the other of the item and the temperature-controlled gas flow, within the temperature-controlled chamber.

4. An apparatus for cooling chocolate to form solid chocolate or an item comprising solid chocolate, the apparatus comprising:
a process line having a loading station and an unloading station, and
a plurality of temperature-controlled chambers each adapted to retain chocolate or at least one item comprising chocolate therein
wherein the process line is arranged to cyclically:
convey the temperature-controlled chambers along the process line to the unloading station following deposition of chocolate or at least one item comprising chocolate into each temperature-controlled chamber at the loading station, and
return the temperature-controlled chambers to the loading station following solidification of the chocolate or item comprising chocolate within its respective temperature-controlled chamber and subsequent removal of the item from its respective temperature-controlled chamber at the unloading station,
wherein each temperature-controlled chamber comprises a temperature controller arranged for providing a predetermined temperature in the temperature-controlled chamber over a treatment period, according to a temperature profile.

5. The apparatus of claim 4 wherein the temperature controller is arranged to maintain the temperature in the temperature-controlled chamber at a holding temperature after the end of the temperature profile until removal of the chocolate or items comprising chocolate from their respective temperature-controlled chambers.

6. The apparatus of claim 4 or claim 5 comprising an enclosure arranged for conveying and retention of the plurality of temperature-controlled chambers.

7. The apparatus of claim 6 wherein the enclosure comprises a carousel for conveying and retention of the plurality of temperature-controlled chambers or wherein the enclosure comprises a paternoster apparatus for conveying and retention of the plurality of temperature-controlled chambers.

8. The apparatus of claim 6 or 7 wherein the enclosure comprises a control apparatus arranged to provide a temperature-controlled atmosphere around the temperature-controlled chambers.

9. The apparatus of any one of claims 4 to 8 wherein the temperature controller of each temperature-controlled chamber comprises a gas blower arranged to provide a temperature-controlled gas flow over said chocolate or items comprising chocolate within each temperature-controlled chamber, optionally wherein at least one of the said item and the gas blower are arranged for periodic movement relative to each other within each temperature-controlled chamber.

10. The apparatus of claim 9 wherein the gas blower has a loop-shaped nozzle arranged to encircle the item at a central region of the loop-shaped nozzle and to direct the temperature controlled gas flow towards the central region of the loop-shaped nozzle.

11. The apparatus of claim 10 wherein the loop-shaped nozzle is arranged to move to and fro along an axis passing through the central region.

12. A temperature-controlled chamber adapted for retaining and solidifying chocolate or chocolate in items comprising chocolate, the chamber comprising:
a temperature controller arranged for providing a predetermined temperature over treatment period within the chamber according to a temperature profile, and
wherein the chamber is adapted for conveying of the chamber along a process line with the temperature controller operable to vary the predetermined temperature over time independently of a location of the chamber along said process line.

13. The temperature-controlled chamber of claim 12 wherein the temperature controller comprises a gas blower arranged to provide a temperature-controlled gas flow over said items.

14. The temperature-controlled chamber of claim 13 wherein at least one of the said chocolate or item comprising chocolate, and the gas blower, are arranged for periodic movement relative to each other within the temperature-controlled chamber.

15. The temperature-controlled chamber of claim 13 or claim 14 wherein the gas blower has a loop-shaped nozzle arranged to encircle said item at a central region of the loop-shaped nozzle and to direct the temperature controlled gas flow towards the central region of the loop-shaped nozzle, optionally wherein the loop-shaped nozzle is arranged to move to and fro along an axis passing through the central region.

## Patentansprüche

1. Verfahren zum Kühlen von Schokolade, um feste Schokolade oder einen feste Schokolade umfassenden Artikel zu bilden, wobei das Verfahren Folgendes umfasst:
i) Ablagern der Schokolade oder des Schokolade umfassenden Artikels innerhalb einer von einer Vielzahl temperaturgeregelter Kammern an einer Beladestation einer Prozesslinie,
ii) Regeln der Temperatur in der Kammer über einen Behandlungszeitraum zum Verfestigen der Schokolade innerhalb der Kammer gemäß einem Temperaturprofil,
iii) Führen jeder temperaturgeregelten Kammer entlang der Prozesslinie zu einer Entladestation,
iv) Entfernen des feste Schokolade umfassenden Artikels aus der jeweiligen temperaturgeregelten Kammer nach dem Behandlungszeitraum an der Entladestation und
v) Zurückführen der temperaturgeregelten Kammer zu der Beladestation.

2. Verfahren nach Anspruch 1, wobei die Temperatur in der temperaturgeregelten Kammer nach dem Ende des Behandlungszeitraums bis zur Entfernung des Artikels aus der temperaturgeregelten Kammer auf einer Haltetemperatur gehalten wird.

3. Verfahren nach Anspruch 1 oder Anspruch 2, wobei der Artikel einem temperaturgeregelten Gasstrom innerhalb der temperaturgeregelten Kammer ausgesetzt wird, wobei wahlweise mindestens eines von dem Artikel und dem temperaturgeregelten Gasstrom periodisch relativ zu dem anderen von dem Artikel und dem temperaturgeregelten Gasstrom innerhalb der temperaturgeregelten Kammer bewegt wird.

4. Vorrichtung zum Kühlen von Schokolade, um feste Schokolade oder einen feste Schokolade umfassenden Artikel zu bilden, wobei die Vorrichtung Folgendes umfasst:
eine Prozesslinie mit einer Beladestation und einer Entladestation und
eine Vielzahl temperaturgeregelter Kammern, die jeweils dazu ausgelegt sind, Schokolade oder mindestens einen Artikel, der Schokolade darin umfasst, zurückzuhalten,
wobei die Prozesslinie angeordnet ist, um zyklisch:
die temperaturgeregelten Kammern nach der Ablagerung von Schokolade oder mindestens einem Schokolade umfassenden Artikel in jede temperaturgeregelte Kammer an der Beladestation entlang der Prozesslinie zu der Entladestation zu befördern und
die temperaturgeregelten Kammern nach der Verfestigung der Schokolade oder des Schokolade umfassenden Artikels innerhalb ihrer bzw. seiner jeweiligen temperaturgeregelten Kammer und der anschließenden Entfernung des Artikels aus seiner jeweiligen temperaturgeregelten Kammer an der Entladestation zu der Beladestation zurückzuführen,
wobei jede temperaturgeregelte Kammer einen Temperaturregler umfasst, angeordnet zum Bereitstellen einer vorher festgelegten Temperatur in der temperaturgeregelten Kammer über einen Behandlungszeitraum gemäß einem Temperaturprofil.

5. Vorrichtung nach Anspruch 4, wobei der Temperaturregler angeordnet ist, um die Temperatur in der temperaturgeregelten Kammer nach dem Ende des Temperaturprofils bis zur Entfernung der Schokolade oder der Schokolade umfassenden Artikel aus ihren jeweiligen temperaturgeregelten Kammern auf einer Haltetemperatur zu halten.

6. Vorrichtung nach Anspruch 4 oder Anspruch 5, umfassend ein Gehäuse, das zum Befördern und zur Retention der Vielzahl von temperaturgeregelten Kammern angeordnet ist.

7. Vorrichtung nach Anspruch 6, wobei das Gehäuse ein Karussell zum Befördern und zur Retention der Vielzahl von temperaturgeregelten Kammern umfasst oder wobei das Gehäuse eine Paternostervorrichtung zum Befördern und zur Retention der Vielzahl von temperaturgeregelten Kammern umfasst.

8. Vorrichtung nach Anspruch 6 oder 7, wobei das Gehäuse eine Regelvorrichtung umfasst, angeordnet zum Bereitstellen einer temperaturgeregelten Atmosphäre um die temperaturgeregelten Kammern herum.

9. Vorrichtung nach einem der Ansprüche 4 bis 8, wobei der Temperaturregler jeder temperaturgeregelten Kammer ein Gasgebläse umfasst, angeordnet zum Bereitstellen eines temperaturgeregelten Gasstroms über der Schokolade oder den Schokolade umfassenden Artikeln innerhalb jeder temperaturgeregelten Kammer, wobei wahlweise mindestens eines von dem Artikel und dem Gasgebläse für eine periodische Bewegung relativ zueinander innerhalb jeder temperaturgeregelten Kammer angeordnet ist.

10. Vorrichtung nach Anspruch 9, wobei das Gasgebläse eine schleifenförmige Düse aufweist, die angeordnet ist, um den Artikel in einem Mittelbereich der schleifenförmigen Düse zu umschließen und den temperaturgeregelten Gasstrom zu dem Mittelbereich der schleifenförmigen Düse hin zu leiten.

11. Vorrichtung nach Anspruch 10, wobei die schleifenförmige Düse angeordnet ist, um sich entlang einer durch den Mittelbereich verlaufenden Achse hin- und her zu bewegen.

12. Temperaturgeregelte Kammer, die zum Zurückhalten und Verfestigen von Schokolade oder Schokolade in Schokolade umfassenden Artikeln ausgelegt ist, wobei die Kammer Folgendes umfasst:
einen Temperaturregler, angeordnet zum Bereitstellen einer vorher festgelegten Temperatur über einen Behandlungszeitraum innerhalb der Kammer gemäß einem Temperaturprofil, und
wobei die Kammer zum Befördern der Kammer entlang einer Prozesslinie ausgelegt ist, wobei der Temperaturregler so bedienbar ist, dass er die vorher festgelegte Temperatur im Zeitablauf unabhängig von einem Standort der Kammer entlang der Prozesslinie variiert.

13. Temperaturgeregelte Kammer nach Anspruch 12, wobei der Temperaturregler ein Gasgebläse umfasst, angeordnet zum Bereitstellen eines temperaturgeregelten Gasstroms über den Artikeln.

14. Temperaturgeregelte Kammer nach Anspruch 13, wobei mindestens eines von der Schokolade oder dem Schokolade umfassenden Artikel und dem Gasgebläse für eine periodische Bewegung relativ zueinander innerhalb der temperaturgeregelten Kammer angeordnet ist.

15. Temperaturgeregelte Kammer nach Anspruch 13 oder Anspruch 14, wobei das Gasgebläse eine schleifenförmige Düse aufweist, angeordnet, um den Artikel in einem Mittelbereich der schleifenförmigen Düse zu umschließen und den temperaturgeregelten Gasstrom zu dem Mittelbereich der schleifenförmigen Düse hin zu leiten, wobei wahlweise die schleifenförmige Düse angeordnet ist, um sich entlang einer durch den Mittelbereich verlaufenden Achse hin- und her zu bewegen.

## Revendications

1. Procédé pour refroidir du chocolat de façon à former du chocolat solide ou un article comprenant du chocolat solide, le procédé comprenant :
i) le dépôt du chocolat ou de l'article comprenant du chocolat au sein d'une chambre parmi une pluralité de chambres à température régulée au niveau d'un poste de chargement d'une ligne de production,
ii) la régulation de la température dans la chambre au cours d'une période de traitement pour solidifier le chocolat à l'intérieur de la chambre selon un profil de température,
iii) le passage de chaque chambre à température régulée le long de la ligne de production vers un poste de déchargement,
iv) le retrait de l'article comprenant du chocolat solide de la chambre à température régulée respective, après la période de traitement, au niveau du poste de déchargement, et
v) le retour de la chambre à température régulée au poste de chargement.

2. Procédé selon la revendication 1, dans lequel, après la fin de la période de traitement, la température dans la chambre à température régulée est maintenue à une température de maintien jusqu'au retrait de l'article de la chambre à température régulée.

3. Procédé selon la revendication 1 ou la revendication 2, dans lequel l'article est soumis à un flux de gaz à température régulée à l'intérieur de la chambre à température régulée, éventuellement dans lequel au moins l'un parmi l'article et le flux de gaz à température régulée est déplacé périodiquement par rapport à l'autre parmi l'article et le flux de gaz à température régulée, à l'intérieur de la chambre à température régulée.

4. Appareil pour refroidir du chocolat de façon à former du chocolat solide ou un article comprenant du chocolat solide, l'appareil comprenant :
une ligne de production possédant un poste de chargement et un poste de déchargement, et
une pluralité de chambres à température régulée conçues chacune pour retenir du chocolat ou au moins un article comprenant du chocolat en leur sein
dans lequel la ligne de production est disposée pour, de façon cyclique :
transporter les chambres à température régulée le long de la ligne de production vers le poste de déchargement à la suite du dépôt de chocolat ou d'au moins un article comprenant du chocolat dans chaque chambre à température régulée au niveau du poste de chargement, et
ramener les chambres à température régulée vers le poste de chargement à la suite de la solidification du chocolat ou de l'article comprenant du chocolat à l'intérieur de sa chambre à température régulée respective et du retrait ultérieur de l'article de sa chambre à température régulée respective au niveau du poste de déchargement,
dans lequel chaque chambre à température régulée comprend un régulateur de température disposé pour fournir une température prédéfinie dans la chambre à température régulée au cours d'une période de traitement, selon un profil de température.

5. Appareil selon la revendication 4, dans lequel le régulateur de température est disposé pour maintenir la température dans la chambre à température régulée à une température de maintien après la fin du profil de température jusqu'au retrait du chocolat ou des articles comprenant du chocolat de leurs chambres à température régulée respectives.

6. Appareil selon la revendication 4 ou la revendication 5, comprenant une enceinte disposée pour le transport et la rétention de la pluralité de chambres à température régulée.

7. Appareil selon la revendication 6, dans lequel l'enceinte comprend un carrousel pour le transport et la rétention de la pluralité de chambres à température régulée ou dans lequel l'enceinte comprend un appareil de type paternoster pour le transport et la rétention de la pluralité de chambres à température régulée.

8. Appareil selon la revendication 6 ou 7, dans lequel l'enceinte comprend un appareil de commande disposé pour fournir une atmosphère à température régulée autour des chambres à température régulée.

9. Appareil selon l'une quelconque des revendications 4 à 8, dans lequel le régulateur de température de chaque chambre à température régulée comprend un injecteur de gaz disposé pour fournir un flux de gaz à température régulée sur ledit chocolat ou lesdits articles comprenant du chocolat à l'intérieur de chaque chambre à température régulée, éventuellement dans lequel au moins l'un parmi ledit article et l'injecteur de gaz est disposé pour un mouvement périodique l'un par rapport à l'autre à l'intérieur de chaque chambre à température régulée.

10. Appareil selon la revendication 9, dans lequel l'injecteur de gaz comporte une buse en forme de boucle disposée pour encercler l'article au niveau d'une région centrale de la buse en forme de boucle et pour diriger le flux de gaz à température régulée en direction de la région centrale de la buse en forme de boucle.

11. Appareil selon la revendication 10, dans lequel la buse en forme de boucle est disposée pour se déplacer dans les deux sens le long d'un axe passant à travers la région centrale.

12. Chambre à température régulée conçue pour retenir et solidifier du chocolat ou du chocolat dans des articles comprenant du chocolat, la chambre comprenant :
un régulateur de température disposé pour fournir une température prédéfinie au cours d'une période de traitement à l'intérieur de la chambre selon un profil de température, et
où la chambre est conçue pour le transport de la chambre le long d'une ligne de production avec le régulateur de température pouvant être actionné de manière à varier la température prédéfinie au fil du temps indépendamment d'un emplacement de la chambre le long de ladite ligne de production.

13. Chambre à température régulée selon la revendication 12, dans laquelle le régulateur de température comprend un injecteur de gaz disposé pour fournir un flux de gaz à température régulée sur lesdits articles.

14. Chambre à température régulée selon la revendication 13, dans laquelle au moins l'un parmi ledit chocolat ou ledit article comprenant du chocolat, et l'injecteur de gaz, sont disposés pour un mouvement périodique l'un par rapport à l'autre à l'intérieur de la chambre à température régulée.

15. Chambre à température régulée selon la revendication 13 ou la revendication 14, dans laquelle l'injecteur de gaz a une buse en forme de boucle disposée pour encercler ledit article au niveau d'une région centrale de la buse en forme de boucle et pour diriger le flux de gaz à température régulée en direction de la région centrale de la buse en forme de boucle, éventuellement dans laquelle la buse en forme de boucle est disposée pour se déplacer dans les deux sens le long d'un axe passant à travers la région centrale.
